(19) Europäisches Patentamt
European Patent Office
Office européen des brevets

(11) Veröffentlichungsnummer: **0 274 063**
**B1**

# (12) EUROPÄISCHE PATENTSCHRIFT

(45) Veröffentlichungstag der Patentschrift: **17.10.90**

(51) Int. Cl.[5]: **C09D 5/44,** C08G 18/54, C08G 18/32

(21) Anmeldenummer: **87118024.6**

(22) Anmeldetag: **05.12.87**

(54) **Verfahren zur Herstellung von kationischen Lackbindemitteln und deren Verwendung.**

(30) Priorität: **15.12.86 AT 3318/86**

(43) Veröffentlichungstag der Anmeldung: **13.07.88 Patentblatt 88/28**

(45) Bekanntmachung des Hinweises auf die Patenterteilung: **17.10.90 Patentblatt 90/42**

(84) Benannte Vertragsstaaten: **BE CH DE ES FR GB IT LI NL SE**

(56) Entgegenhaltungen:
**EP-A- 0 209 857**
**EP-A- 0 218 812**
**FR-A- 2 301 585**

(73) Patentinhaber: **Vianova Kunstharz Aktiengesellschaft, A-8402 Werndorf(AT)**

(72) Erfinder: **Paar, Willibald, Dr., Schanelgasse 19, A-8010 Graz(AT)**
Erfinder: **Arzt, Aton, Grazerstrasse 28, A-8430 Leibnitz(AT)**

**EP 0 274 063 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen.. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur Herstellung von kationischen Lackbindemitteln, welche durch Umsetzung von substituierten Harnstoffen mit Formaldehyd und Phenolen erhalten erden können.

Aus der Europäischen Patentanmeldung EP-A2-0 209 857 sind kationische Lackbindemittel bekannt, die durch einen schematischen Aufbau

$$E - O - PH - CH_2 - \underset{A}{\underset{|}{N}} - \overset{O}{\overset{\|}{C}} - NH - DI - NCO$$

gekennzeichnet sind, wobei

E - den Rest eines Epoxidharzes
- PH - den Rest eines Phenols
A - den Rest eines Amins und
- DI - NCO den Rest eines halbblockierten Diisocyanats

darstellt.

Die Herstellung dieser Produkte erfolgt durch eine Aminoalkylierungsreaktion aus einem Phenol mit einem primären Amin und nachfolgender Reaktion der NH-Gruppe mit einem halbblockierten Diisocyanat oder durch direkte Aminoalkylierung eines Phenols mit dem Addukt aus dem primären Amin und dem halbblockierten Diisocyanat.

Die Produkte sind in überraschend glatter Weise herstellbar und ergeben nach Protonierung wasserverdünnbare Bindemittel für Lacke, die gute applikatorische Eigenschaften aufweisen und bereits bei einer Einbrenntemperatur von ca. 160 Grad C einwandfrei vernetzte Filme ergeben.

Es wurde nun gefunden, daß auch substituierte Harnstoffe, wie sie bei der Reaktion eines sekundären Amins mit einer Isocyanatgruppe erhalten werden, mit Formaldehyd und einem Phenol kondensiert werden können.

Die vorliegende Erfindung betrifft demgemäß ein Verfahren zur Herstellung von nach Protonierung wasserverdünnbaren, kationischen Lackbindemitteln durch Umsetzung von substituierten Harnstoffen mit Phenolen und Formaldehyd, welches dadurch gekennzeichnet ist, daß man (A) eine mindestens eine freie und gegebenenfalls weitere blockierte NCO-Gruppen aufweisende Isocyanatverbindung mit einer den freien Isocyanatgruppen äquivalenten Menge eines sekundären, aliphatischen Amins oder eines sekundären Amins, welches eine als Ketimin blockierte primäre Aminogruppe aufweist, oder eines Umsetzungsprodukts aus einem Monoalkylamin oder Monoalkanolamin mit einer Mono-, Di- oder Polyepoxidverbindung oder eines Umsetzungsprodukts aus einem Acrylsäureester mit einem Aminoalkylalkandiol oder eines Umsetzungsprodukts aus einem diprimären Diamin mit ! einer Monoepoxidverbindung bei 25 bis 60°C, gegebenenfalls in einem aprotischen Lösemittel, reagieren läßt, (B) die so erhaltene substituierte Harnstoffverbindung mit Formaldehyd und mit einem Phenol oder einer 3 mindestens eine formaldehydreaktive Stelle aufweisenden Phenolkomponente kondensiert, und gegebenenfalls (C) die phenolischen Hydroxylgruppen ganz oder teilweise mit Mono-, Di- oder Polyepoxidverbindungen unter Beachtung ihrer Funktionalität und des resultierenden Molekulargewichts verethert, mit der Maßgabe, daß die Endprodukte eine titrierbare Basizität entsprechend einer Aminzahl von mindestens 20 mg KOH/g, vorzugsweise von mehr als 35 mg KOH/g, aufweisen.

Die Erfindung betrifft weiters die Verwendung der nach diesem Verfahren hergestellten Produkte in wasserverdünnbaren Lacken, insbesonders in kathodisch abscheidbaren Elektrotauchlacken.

Für die Bildung der substituierten Harnstoffverbindungen können Mono-, Di- oder Polyisocyanate eingesetzt werden. Die Verbindungen müssen mindestens eine freie NCO-Gruppe aufweisen. Für die Formulierung von selbstvernetzenden Bindemitteln können die Produkte auch weitere blockierte NCO-Gruppen enthalten. Entsprechende Isocyanatverbindungen sind in großer Zahl bekannt und verfügbar.

Bevorzugt werden für das erfindungsgemäße Verfahren Diisocyanate bzw. halbblockierte Diisocyanate eingesetzt. Zur Herstellung der letzteren werden vorzugsweise solche Diisocyanate herangezogen, deren NCO-Gruppen verschiedene Reaktivität aufweisen, wie Toluylendiisocyanat oder Isophorondiisocyanat.

Als Blockierungsmittel dienen bevorzugt aliphatische Monoalkohole, welche - gegebenenfalls in Gegenwart der üblichen Katalysatoren - unter den Einbrennbedingungen abgespalten werden. Andere Blockierungsmittel sind beispielsweise Phenole, Oxime, Amine, ungesättigte Alkohole, Caprolactam, etc.

Als sekundäre nichtaromatische Amine können die üblichen Dialkylamine, wie Diethylamin und seine Homologe eingesetzt werden. Weiters können auch Amine wie Diethylentriamin, Aminoethylethanolamin oder 1-(2-Aminoethyl)-piperazin eingesetzt werden, wenn deren primäre Aminogruppen als Ketimine blockiert sind. Eine weitere Gruppe von sekundären Aminen sind die sekundären Alkanolamine wie Alkylalkanolamine, Dialkanolamine oder andere β-Hydroxyalkylamine, wie sie durch Umsetzung von Monoalkylaminen bzw. Monoalkanolaminen mit Monoepoxidverbindungen oder durch MICHAEL-Addition von Acrylsäureestern an Aminoalkylalkandiole erhalten werden. Ebenso sind entsprechende Umsetzungsprodukte von Monoalkyl- bzw. Monoalkanolaminen mit Di- bzw. Polyepoxidverbindungen sowie von diprimären Diaminen mit Monoepoxidverbindungen einsetzbar.

Die Isocyanatverbindung wird mit dem sekundären Amin, gegebenenfalls in Gegenwart aprotischer Lösemittel, bei 25 bis 60 Grad C umgesetzt, wobei die sekundären Aminogruppen und freie Isocyanatgruppen in äquivalenten Mengen eingesetzt werden. Vorzugsweise wird bei dieser Reaktion dem vorgelegten Amin die Isocyanatverbindung in Portionen zugegeben, wobei üblicherweise die Reaktion nach Ende der Zugabe vollständig abgelaufen ist.

Der in dieser Weise erhaltene substituierte Harnstoff, der noch ein mit Formaldehyd reaktives Wasserstoffatom aufweist, wird in der zweiten Reaktionsstufe mit Formaldehyd und einem Phenol kondensiert.

Als Formaldehydquelle wird vorzugsweise Paraformaldehyd in der handelsüblichen Form mit einem $CH_2O$-Gehalt von 85 bis 100 % eingesetzt.

Als Phenolkomponente werden neben Phenol, bevorzugt substituierte Phenole wie Monoalkylphenole, Arylphenole oder Arylalkylphenole, vorzugsweise Monoalkylphenole mit Alkylresten mit mehr als 4 C-Atomen oder Diphenylolalkane verwendet.

Gegebenenfalls können auch komplexe Phenolkomponenten für diese Reaktion zum Einsatz gelangen, soferne sie noch über mindestens eine formaldehydreaktive Stelle verfügen. Als Beispiele hiefür seien entspechende Phenol-Aldehydkondensate oder Aminoalkylierungsprodukte von Phenolen genannt.

In allen Fällen ist die Funktionalität der Komponenten so aufeinander abzustimmen, daß die Umsetzungsprodukte nach zumindest teilweiser Neutralisation der basischen Stickstoffgruppen einwandfrei mit Wasser verdünnt werden können. Die Produkte müssen in allen Fällen eine titrierbare Basizität entsprechend einer Aminzahl von mindestens 20 mg KOH/g aufweisen.

Die Einführung der Basizität kann entweder durch Verwendung von Aminen mit ketiminblockierten primären Aminogruppen oder Einsatz von tertiäre Aminogruppen aufweisenden Verbindungen zur Blockierung von Isocyanatgruppen erfolgen. Auch das für die Bildung des substituierten Harnstoffs eingesetzt sekundäre Amin kann zusätzlich tertiäre Aminogruppen aufweisen.

Die Kondensation des substituierten Harnstoffs, der Phenolkomponente und des Formaldehyds erfolgt bei 60 bis 120Grad C, wobei das entstehende Reaktionswasser durch azeotrope Destillation mit Hilfe eines Schleppmittels, wie Toluol oder einem Benzinkohlenwasserstoff, entfernt wird. Nach Ende der Reaktion wird das Schleppmittel unter Vakuum entfernt und das Produkt in einem für die weitere Verarbeitung geeigneten, zumindest wassertoleranten Lösemittel gelöst. Vorzugsweise werden als Lösemittel Glykolether, wie Ethylenglykolmono- oder di- $C_1$-$C_4$-alkylether oder entsprechende Propylenglykolether eingesetzt.

Gegebenenfalls können die phenolischen Hydroxylgruppen des Kondensationsproduktes in bekannter Weise mit Epoxidverbindungen verethert werden. Unter Beachtung der Funktionalität und des resultierenden Molekulargewichts können dazu Mono-, Di- oder Polyepoxidverbindungen, wie Glycidylester bzw. - ether von Carbonsäuren bzw. Di- oder Polyolen verwendet werden. Bevorzugte Monoepoxidverbindungen sind die Glycidylester der sogenannten KOCH-Säuren, sowie Glycidylether mit längerkettigen aliphatischen Resten. Als Diepoxidverbindungen werden die verschiedenen handelsüblichen Produkte auf der Basis von Bisphenol A bevorzugt eingesetzt. Die Veretherung erfolgt bei 80 bis 120 Grad C, wobei eine zusätzliche Katalysierung aufgrund des basischen Charakters der Produkte üblicherweise nicht notwendig ist.

Zur Erzielung der Wasserverdünnbarkeit werden die basischen Gruppen des Bindemittels mit Säuren, vorzugsweise mit Ameisensäure, Essigsäure oder Milchsäure, partiell oder vollständig neutralisiert. Für eine praxisgerechte Verdünnbarkeit genügt dafür üblicherweise eine Neutralisation von 20 - 60 % der basischen Gruppen oder eine Menge von ca.20 bis 60 Millimol Säure pro 100 g Festharz. Die Bindemittel werden dann mit deionisiertem Wasser auf die gewünschte Konzentration verdünnt; gegebenenfalls werden sie vor der Neutralisation oder vor der Verdünnung oder im teilverdünnten Zustand mit Vernetzungskatalysatoren, Pigmenten, Füllstoffen und anderen Zusatzstoffen zu pigmentierten Lacken verarbeitet.

Die Formulierung solcher Lacke sowie deren Verarbeitung im Elektrotauchlackierverfahren sind dem Fachmann bekannt und in der Literatur beschrieben. Die Härtung der abgeschiedenen Überzüge erfolgt beim Einsatz als Grundierung bei Temperaturen zwischen 150 und 170 Grad C während 10 bis 30 Minuten. Soferne die Bindemittel nicht in ausreichendem Maße selbstvernetzende Strukturen aufweisen, können auch zusätzliche Vernetzungsmittel, wie blockierte Isocyanate oder Aminoharze bzw. Phenolharze, mitverwendet werden.

Die Produkte können bei entsprechender Formulierung auch durch andere Verfahren, wie Tauchen, Walzen oder Spritzen aufgebracht werden. Gegebenenfalls können die Bindemittel auch in organischen Lösungsmitteln verarbeitet werden.

Die nachstehenden Beispiele erläutern die Erfindung, ohne sie in ihrem Umfang zu beschränken. Alle Angaben in Teilen oder Prozenten beziehen sich, soferne nichts anderes angegeben ist, auf Gewichtseinheiten. Bei molaren Mengenangaben sind die Gewichtsteile Gramm.

Beispiel 1:

267 Tle (1 Mol) eines Diketimins aus Diethylentriamin und Methylisobutylketon (Molverhältnis 1 : 2) werden in Gegenwart von 143 Tlen Toluol bei 35 bis 40 Grad C unter Kühlung mit 304 Tlen (1 Mol) eines mit 2-Ethylhexanol halbblockierten Toluylendiisocyanats umgesetzt, wobei die Isocyanatverbindung innerhalb etwa 1,5 Stunden gleichmäßig zugegeben wird. Nach Ende der Zugabe ist der NCO-Wert bereits auf praktisch 0 gesunken. Der Ansatz wird mit 220 Tlen (1 Mol) Nonylphenol und 33 Tlen (1 Mol) Paraformaldehyd (91 % $CH_2O$) versetzt und auf 80 Grad C erwärmt. Bei langsam bis 120 Grad C gesteigerter Temperatur wird das entstehende Reaktionswasser durch azeotrope Destillation entfernt. Nach Abtrennung der berechneten Wassermenge wird das Schleppmittel unter Vakuum entfernt und der Ansatz mit Methoxypropanol auf einen Festkörpergehalt von 75 % verdünnt.

Zur Veretherung der phenolischen Hydroxylgruppen wird der Ansatz mit 679 Tlen (1 Epoxidval) einer 70%igen Lösung eines Epoxidharzes auf Basis von Bisphenol A (Epoxidäquivalentgewicht ca. 475) in Diethylenglykoldimethylether versetzt und bei 95 bis 110 Grad C bis zur vollständigen Umsetzung der Epoxidgruppen reagiert.

Aus dieser Bindemittellösung wird durch Zugabe von 65 Millimol Ameisensäure pro 100 g Festharz, 0,7 Tlen Zinn (als Dibutylzinndilaurat) und Verdünnen mit deionisiertem Wasser auf einen Harzfestkörpergehalt von 15 % ein kathodisch abscheidbarer Klarlack hergestellt. Ein auf zinkphosphatiertem Stahlblech abgeschiedener und bei 150 Grad C eingebrannter Film mit einer Schichtstärke von ca 20 µm zeigt eine Methylethylketonfestigkeit von ca. 200 Doppelhüben. Ein pigmentierter Lack (100 Tle Bindemittel-Festharz, 1,5 Tle Farbruß, 146 Tle Titandioxid, 12,5 Tle basisches Bleisilikat, 0,7 Tle Zinn (als Dibutylzinndilaurat) und deionisiertes Wasser zum Verdünnen auf einen Harzfestkörper von 18 %) ergibt bei der kathodischen Abscheidung auf zinkphosphatiertem Stahlblech und einer Einbrenntemperatur von 150 Grad C (20 Minuten) Filme, die bei einer Schichtstärke von 22 ± 2 µm eine Salzsprühbeständigkeit (ASTM B 117-73) von mehr als 1500 Stunden erreichen.

Beispiel 2:

576 Tle (2 Mol) eines sekundären Amins, welches durch Umsetzung von 1 Mol Dimethylaminopropylamin mit 1 Mol 2-Ethylhexylglycidylether erhalten wurde, werden in Anwesenheit von 507 Tlen Xylol bei 30 bis 50 Grad C unter Kühlung mit 608 Tlen (2 Mol) eines mit 2-Ethylhexanol halbblockierten Toluylendiisocyanats wie im Beispiel 1 angegeben umgesetzt. Nach Zugabe von 66 Tlen (2 Mol) Paraformaldehyd (91 % $CH_2O$) wird der Ansatz 30 bis 45 Minuten bei 70 bis 80 Grad C gehalten und anschließend 228 Tle (1 Mol) Bisphenol A und 60 Tle Xylol zugesetzt. Bei langsam bis 140 Grad C gesteigerter Temperatur wird das entstehende Reaktionswasser azeotrop entfernt und anschließend das Xylol unter Vakuum entfernt. Der Ansatz wird mit Methoxypropanol auf einen Festkörpergehalt von 80 % verdünnt.

Die Veretherung der phenolischen Hydroxylgruppen erfolgt mit 679 Tlen der auch im Beispiel 1 verwendeten Epoxidharzlösung und 186 Tlen (1 Mol) 2-Ethylhexylglycidylether bei 90 bis 95 Grad C bis zur vollständigen Umsetzung der Epoxidgruppen. Das Produkt ist nach Zugabe von 60 Millimol Ameisensäure pro 100 g Festharz wasserlöslich.

Die weitere Verarbeitung und Prüfung erfolgt wie im Beispiel 1 angegeben und ergibt im wesentlichen ein vergleichbares Eigenschaftsbild.

Beispiel 3:

484 Tle (1 Mol) eines sekundären Amins, welches durch Umsetzung von 1 Mol Hexamethylendiamin mit 2 Mol Dodecenoxid erhalten wurde, werden nach Zugabe von 533 Tlen Toluol mit 760 Tlen (2 Mol) eines mit Isodecylalkohol halbblockierten Isophorondiisocyanates bei 30 bis 40 Grad C unter Kühlung portionsweise versetzt. Nach Ende der Zugabe wird der Ansatz noch 1,5 Stunden bei 40 Grad C gehalten. Dann werden 1866 Tle (entsprechend 2 Mol phenolischer Hydroxylgruppen) des unten beschriebenen Phenolkondensats und 66 Tle (2 Mol) Paraformaldehyd (91 % $CH_2O$) zugegeben und bei 90 bis 130 Grad C das Reaktionswasser azeotrop entfernt.

Die teilweise Veretherung der phenolischen Hydroxylgruppen erfolgt mit 1357 Tlen einer 70%igen Lösung in Diethylenglykoldimethylether eines Epoxidharzes auf Basis Bisphenol A (EEG ca. 950) bei 95 bis 100 Grad C bis zum vollständigen Umsatz der Epoxidgruppen. Das resultierende Bindemittel ist nach Zugabe von 45 Millimol Essigsäure pro 100 g Festharz wasserlöslich.

Die weitere Verarbeitung und Prüfung erfolgt wie im Beispiel 1 angegeben. Bei 160 Grad C eingebrannte Überzüge ergeben ein mit dem Produkt gemäß Beispiel 1 vergleichbares Eigenschaftsbild.

Die Herstellung des im Beispiel 3 eingesetzten Phenolkondensates erfolgt in folgender Weise:

Zu 220 Tlen (1 Mol) Nonylphenol, 130 Tlen (1 Mol) Diethylaminopropylamin und 100 Tlen Toluol werden bei 75 Grad C unter leichtem Kühlen 33 Tle (1 Mol) Paraformaldehyd (91 % $CH_2O$) zugesetzt. Dann wird die Temperatur langsam gesteigert, bis sich eine zügige azeotrope Destillation einstellt. Nach Abtrennen von 21 Tlen Reaktionswasser wird das Produkt in 167 Tlen Toluol gelöst. Die Lösung wird bei 30 bis 40 Grad C unter Kühlung mit 304 Tlen (1 Mol) eines mit 2-Ethylhexanol halbblockierten Toluylendiisocyanats versetzt und die Temperatur von 40 Grad C bis zum Erreichen eines Isocyanatwertes von 0 gehalten.

Beispiel 4:

2013 Tle (entsprechend ca. 2 Mol NH-Gruppen) einer 60%igen Lösung in Toluol eines durch Umsetzung von 1 Mol eines Bisphenol-A-Diepoxidharzes (EEG ca. 475) mit 2 Mol 2-Ethylhexylamin erhaltenen sekundären Amins, werden mit 760 Tlen (2 Mol) eines mit Isodecylalkohol halbblockierten Isophorondiisocyanats bei 30 bis 40 Grad C unter Kühlen portionsweise versetzt. Nach Ende der Zugabe wird die Mischung ca. 1 Stunde bei 40 Grad C gehalten. Nach Zugabe von 888 Tlen (0,5 Mol, entsprechend 1 Mol formaldehydreaktiver Stellen) eines Phenolkondensats (siehe unten), sowie 933 Tlen (1,0 Mol, entsprechend 1 Mol formaldehydreaktiver Stellen) des auch im Beispiel 3 eingesetzten Phenolkondensats und 66 Tlen (2 Mol) Paraformaldehyd (91 % $CH_2O$) wird die Temperatur langsam gesteigert, bis bei zügiger azeotroper Destillation das entstehende Reaktionswasser entfernt ist. Anschließend werden die phenolischen Hydroxylgruppen bei 95 bis 100 Grad C mit 368 Tlen (2 Mol) Dodecenoxid umgesetzt. Das Toluol wird dann unter Vakuum entfernt und der Ansatz mit Ethoxypropanol auf einen Festkörpergehalt von 70 % eingestellt. Das Produkt ergibt nach Zusatz von 40 Millimol Essigsäure pro 100 g Festharz und Verdünnen mit Wasser einen stabilen Klarlack. Die weitere Verarbeitung und Prüfung erfolgt wie im Beispiel 1 angegeben. Die Prüfung ergab ein Eigenschaftsbild, welches mit dem des Produktes gemäß Beispiel 1 weitgehend übereinstimmt.

Das oben erwähnte Phenolkondensat wird wie folgt hergestellt:

Wie bei dem in Beispiel 3 eingesetzten Phenolkondensat werden 228 Tle (1 Mol) Bisphenol A mit 260 Tlen (2 Mol) Diethylaminopropylamin und 66 Tlen (2 Mol) Paraformaldehyd (91 % $CH_2O$) in Gegenwart von 294 Tlen Toluol als Azeotropschleppmittel bis zu Abtrennung von 42 Tlen Reaktionswasser umgesetzt. Nach Kühlen auf 30 Grad C werden innerhalb von 45 Minuten 760 Tle (2 Mol) eines mit Isodecylalkohol halbblockierten Isophorondiisocyanats zugegeben. Sobald ein NCO-Wert von praktisch 0 erreicht ist, wird das Produkt in 210 Tlen Methylisobutylketon gelöst.

Beispiel 5:

576 Tle (entsprechend 2 Mol NH-Gruppen) eines durch Umsetzung von 1 Mol Dimethylaminopropylamin mit 1 Mol 2-Ethylhexylglycidylether erhaltenen sekundären Amins werden in Anwesenheit von 60 Tlen Toluol mit 210 Tlen (1 Mol) Trimethylhexamethylendiisocyanat bei 30 bis 40 Grad C unter Kühlung reagiert. Sobald ein NCO-Wert von praktisch 0 erreicht ist, werden 300 Tle (2 Mol) p-tert. Butylphenol und 66 Tle (2 Mol) Paraformaldehyd (91 % $CH_2O$) zugesetzt und die Temperatur langsam auf 130 Grad C gesteigert, bis eine zügige azeotrope Destillation erreicht ist. Nach Abziehen des Toluols wird der Ansatz mit Diethylenglykoldimethylether auf einen Festkörpergehalt von 70 % verdünnt. Die phenolischen Hydroxylgruppen werden anschließend mit 186 Tlen (1 Mol) 2-Ethylhexylglycidylether und 475 Tlen (0,5 Mol) eines Bisphenol-A-Diepoxidharzes bei 95 bis 100 Grad C verethert.

Zur Einführung einer Härtungskomponente wird der Ansatz weiters mit 912 Tlen (3 Mol) eines mit 2-Ethylhexanol halbblockierten Toluylendiisocyanats bei 60 bis 70 Grad C umgesetzt. Das entstehende Produkt ist nach Zugabe von 40 Millimol Essigsäure pro 100 g Festharz wasserlöslich.

Die weitere Verarbeitung und Prüfung erfolgt wie im Beispiel 1 angegeben. 25 Minuten bei 160 Grad C eingebrannte Überzüge zeigen weitgehend die gleichen Eigenschaften, wie sie gemäß Beispiel 1 gefunden wurden.

## Patentansprüche

1. Verfahren zur Herstellung von nach Protonierung wasserverdünnbaren, kationischen Lackbindemitteln durch Umsetzung von substituierten Harnstoffen mit Phenolen und Formaldehyd, dadurch gekennzeichnet, daß man

(A) eine mindestens eine freie und gegebenenfalls weitere blockierte NCO-Gruppen aufweisende Isocyanatverbindung mit einer den freien Isocynatgruppen äquivalenten Menge eines sekundären, aliphatischen Amins oder eines sekundären Amins, welches eine als Ketimin blockierte primäre Aminogruppe aufweist, oder eines Umsetzungsprodukts aus einem Monoalkylamin oder Monoalkanolamin mit einer Mono-, Di- oder Polyepoxidverbindung oder eines Umsetzungsprodukts aus einem Acrylsäureester mit einem Aminoalkylalkandiol oder eines Umsetzungsprodukts aus einem diprimären Diamin mit einer Monoepoxidverbindung bei 25 bis 60°C, gegebenenfalls in einem aprotischen Lösemittel, reagieren läßt,

(B) die so erhaltene substituierte Harnstoffverbindung mit Formaldehyd und mit einem Phenol oder einer mindestens eine formaldehydreaktive Stelle aufweisenden Phenolkomponente kondensiert, und gegebenenfalls

(C) die phenolischen Hydroxylgruppen ganz oder teilweise mit Mono-, Di- oder Polyepoxidverbindungen unter Beachtung ihrer Funktionalität und des resultierenden Molekulargewichts verethert, mit der Maßgabe, daß die Endprodukte eine titrierbare Basizität entsprechend einer Aminzahl von mindestens 20 mg KOH/g, vorzugsweise von mehr als 35 mg KOH/g, aufweisen.

2. Verfahren nach Anspruch 1, dadurch gekennzeichnet, daß man in der Stufe (B) als Phenolkomponente, welche mindestens eine formaldehydreaktive Stelle aufweist, Phenol-Aldehyd-Kondensate oder Aminoalkylierungsprodukte von Phenolen einsetzt.

3. Verfahren nach Anspruch 1, dadurch gekennzeichnet, daß man in der Stufe (C) als Monoepoxidverbindungen Glycidylester der sogenannten KOCH-Säuren oder Glycidylether mit längerkettigen aliphatischen Resten einsetzt.

4. Verfahren nach Anspruch 1, dadurch gekennzeichnet, daß man in der Stufe (C) als Diepoxidverbindungen Epoxidharze auf der Basis von Bisphenol A einsetzt.

5. Verwendung der nach den Ansprüchen 1 bis 4 erhaltenen Verfahrensprodukte in wasserverdünnbaren Lacken, insbesonders in kathodisch abscheidbaren Elektrotauchlacken.

## Revendications

1. Procédé de préparation de liants pour laques cationiques diluables à l'eau après protonation, par réaction d'urées substituées avec des phénols et le fomaldéhyde, caractérisé en ce que

(A) l'on fait réagir un composé d'isocyanate présentant au moins un groupe NCO libre et éventuellement d'autres groupes NCO bloqués avec une quantité qui équivaut aux groupes isocyanate libres d'une amine aliphatique secondaire ou d'une amine secondaire qui présente un groupe amine primaire bloqué sous forme de cétimine, ou d'un produit de réaction d'une monoalkylamine ou d'une monoalcanolamine et d'un composé mono-, di- ou polyépoxydique ou d'un produit de réaction d'un ester de l'acide acrylique et d'un aminoalkylalcanediol ou d'un produit de réaction d'une diamine diprimaire et d'un composé monoépoxydique entre 25 et 60°C, éventuellement dans un solvant aprotique,

(B) l'on condense le composé d'urée substitué ainsi obtenu avec le fomaldéhyde et avec un phénol ou un constituant phénolique présentant au moins un site réactif vis-à-vis du fomaldéhyde, et éventuellement

(C) l'on éthérifie totalement ou partiellement les groupes hydroxyle phénoliques avec des composés mono-, di- ou polyépoxydiques en tenant compte de leur fonctionnalité et du poids moléculaire résultant, avec la condition que les produits finals présentent une basicité titrable correspondant à un indice d'amine d'au moins 20 mg de KOH/g, de préférence supérieur à 35 mg de KOH/g.

2. Procédé selon la revendication 1, caractérisé en ce que dans l'étape (B) l'on utilise comme constituant phénolique qui présente au moins un site réactif vis-à-vis du fomaldéhyde des condensats phénol-aldéhyde ou des produits d'aminoalkylation de phénols.

3. Procédé selon la revendication 1, caractérisé en ce que dans l'étape (C) on utilise comme composés monoépoxydiques des esters glycidyliques de ce que l'on appelle les acides de KOCH ou des éthers glycidyliques avec des restes aliphatiques à plus longue chaîne.

4. Procédé selon la revendication 1, caractérisé en ce que dans l'étape (C) l'on utilise comme composés diépoxydiques des résines époxy à base de bisphénol A.

5. Utilisation des produits de procédé obtenus selon les revendications 1 à 4 dans les laques diluables à l'eau, en particulier dans les laques pour trempage électrophorétique précipitables à la cathode.

## Claims

1. Process for the preparation of cationic paint binders which, after protonation, can be diluted with water, by reacting substituted ureas with phenols and formaldehyde, characterized in that

(A) an isocyanate compound containing at least one free, and, if appropriate, further masked, NCO group(s) is reacted at 25 to 60°C, if appropriate in an aprotic solvent, with an amount, equivalent to the free isocyanate groups, of a secondary, aliphatic amine or of a secondary amine containing a primary amino group masked in the form of a ketimine, or of a product from the reaction of a monoalkylamine or monoalkanolamine with a mono-, di- or poly-epoxide compound or of a product from the reaction of an acrylic acid ester with an aminoalkylalkanediol or of a product from the reaction of a diprimary diamine with a monoepoxide compound,

(B) the substituted urea compound thus obtained is subjected to a condensation reaction with formaldehyde and with a phenol or with a phenolic component containing at least one formaldehyde-reactive position, and, if appropriate,

(C) the phenolic hydroxyl groups are etherified completely or partially with mono-, di- or poly-epoxide compounds, taking into account their functionality and the resulting molecular weight, subject to the proviso that the end products have a titratable basicity corresponding to an amine number of at least 20 mg of KOH/g, preferably of more than 35 mg of KOH/g.

2. Process according to Claim 1, characterized in that phenol/aldehyde condensates or aminoalcylation products of phenols are employed in stage (B) as the phenolic component containing at least one formaldehydereactive position.

3. Process according to Claim 1, characterized in that glycidyl esters of the so-called KOCH-acids or glycidyl ethers having aliphatic radicals of a fairly long chain are employed in stage (C) as the monoepoxide compounds.

4. Process according to Claim 1, characterized in that epoxide resins based on bisphenol A are employed in stage (C) as the diepoxide compounds.

5. The use of the process products obtained in accordance with Claims 1 to 4 in water-thinnable paints, especially in electrodeposition paints which can be deposited cathodically.